# EUROPEAN PATENT APPLICATION

(11) **EP 3 296 556 A1**
(43) Date of publication of application: **21.03.2018**
(21) Application number: 16792794.6
(22) Date of filing: 13.05.2016
(51) Int. Cl.: F02M 21/04, F02D 19/02, F02D 41/02, F02D 41/04

(54) **BIOGAS-FIRED ENGINE**

(30) Priority: 14.05.2015 JP 2015098828
(71) Applicant: Yanmar Co., Ltd., Osaka-shi, Osaka 530-8311 (JP)
(72) Inventor: NAKAZONO Toru, Osaka 530-8311 (JP); WATANABE Yuta, Osaka 530-8311 (JP)
(74) Representative: Hinkelmann, Klaus
(86) International application number: PCT/JP2016/064340
(87) International publication number: WO 2016/182070

(57) **Abstract**

[Object] is to provide a biogas-fired engine capable of sucking a biogas at a flow rate necessary for stoichiometric combustion by raising a negative suction pressure of a venturi mixer. [Solution] is a biogas-fired engine 1 fueled solely by a biogas G1 to G2 derived from organic waste, the biogas-fired engine 1 comprising: a pressure equalizing valve 30 arranged in a gas supply path 31; an A/F valve 41 arranged in the gas supply path 31 at a location downstream of the pressure equalizing valve 30; and a venturi mixer 40 arranged at a location where the gas supply path 31 joins an intake path 43, wherein the pressure equalizing valve 30 adjusts a pressure to approximately atmospheric pressure, and an area of the venturi mixer 40 is adjusted so as to provide a target air flow velocity Tas that allows the biogas G1 to G2 to be sucked at a flow rate necessary for causing predetermined combustion with a predetermined engine output P by a differential pressure between a pressure of the venturi mixer 40 and a pressure adjusted by the pressure equalizing valve 30.

## Description

### Technical Field

The present invention relates to a biogas-fired engine that uses a biogas.

### Background Art

As a method for operating an engine that is fueled by a biogas derived from organic waste, a dual fuel engine that uses a biogas as a fuel and a diesel oil as an auxiliary fuel is conventionally known (for example, see Patent Literature 1 (PTL 1)).

In a dual fuel engine of this type, which uses a diesel oil as an auxiliary fuel, the operation is performed irrespective of the magnitude of a negative suction pressure in sucking a biogas in a mixer.

### Citation List

### Patent Literature

PTL 1: Japanese Patent No. 4070115

### Summary of Invention

### Technical Problem

As compared to the conventional dual fuel engine mentioned above, a biogas-fired engine that solely uses a biogas as a single fuel involves such an inconvenience that a negative suction pressure of a venturi mixer is insufficient although the venturi mixer needs to suck a predetermined amount of biogas in a case of performing stoichiometric combustion.

A conceivable approach is to pressurize, with a fan, a pre-compression chamber of a pressure equalizing valve which is arranged upstream of a venturi mixer, to raise a gas pressure at a location downstream of the pressure equalizing valve, thereby pushing a biogas in. This, however, requires that the fan be kept driven during an operation of the engine, which causes such an inconvenience that the operation efficiency of the biogas-fired engine is lowered to a degree corresponding to self-consumption power.

Another conceivable approach is to provide a gas compressor between a pressure equalizing valve and a venturi mixer so that a biogas is directly pressurized to be pushed in. This, however, has a risk that compression of the biogas, which contains a large amount of moisture, may cause condensed water to be produced so that a malfunction of an intake valve or a throttle valve occurs.

The present invention is made in view of the circumstances described above, and an object of the present invention is to provide a biogas-fired engine capable of sucking a biogas at a flow rate necessary for stoichiometric combustion by raising a negative suction pressure of a venturi mixer.

### Solution to Problem

To solve the problems described above, a biogas-fired engine according to an aspect of the present invention is a biogas-fired engine fueled solely by a biogas derived from organic waste, the biogas-fired engine including: fuel pressure adjustment means arranged in a fuel path; air-fuel ratio adjustment means arranged in the fuel path at a location downstream of the fuel pressure adjustment means; and a venturi mixer arranged at a location where the fuel path joins an intake path, wherein the fuel pressure adjustment means adjusts a pressure to approximately atmospheric pressure, and an area of the venturi mixer is adjusted so as to provide an air flow velocity that allows the biogas to be sucked at a flow rate necessary for causing predetermined combustion with a predetermined engine output by a differential pressure between a pressure of the venturi mixer and a pressure adjusted by the fuel pressure adjustment means.

In the biogas-fired engine described above, a maximum passage area of the air-fuel ratio adjustment means and a variable range of the passage area may be adjusted in accordance with the adjustment of the area of the venturi mixer.

The biogas-fired engine described above may further include: heating means provided in an engine cooling water circuit; and control means for, upon receiving a start command, driving a cooling water pump and sensing a cooling water temperature, and if the temperature is lower than a predetermined temperature, driving the heating means until the temperature reaches the predetermined temperature or higher while standing by for driving engine forced-drive means.

The biogas-fired engine described above may further include: a gasifier for combusting organic waste to produce a biogas, the gasifier being provided in the fuel path at a location upstream of the fuel pressure adjustment means; heating means provided in an engine cooling water circuit; and control means for starting combustion in the gasifier a first predetermined time before an engine start time, sensing a cooling water temperature, and if the temperature is lower than a predetermined temperature, driving a cooling water pump a second predetermined time before, the second predetermined time being shorter than the first predetermined time, while driving the heating means until the temperature reaches the predetermined temperature or higher.

In biogas-fired engine described above, the area of the venturi mixer where air passes through may be adjusted such that an air flow velocity is obtained, the air flow velocity enabling the biogas and air to be mixed in such a manner as to provide a calorific value that is comparable to a calorific value of a mixed gas obtained in a case where stoichiometric combustion of the engine is performed with a predetermined output by using a town gas.

In the biogas-fired engine described above, the adjustment may be made so as to obtain an air flow velocity that enables the biogas and air to be mixed at a biogas/air ratio of 54/46 to 40/60.

### Advantageous Effects of Invention

As described above, in a first aspect of the present invention, for operating the engine, the biogas can be supplied to a combustion chamber of the engine at a flow rate necessary for causing predetermined combustion with a predetermined engine output by a differential pressure caused as a result of adjustment of the area of the venturi mixer, without any need to separately provide pressurization means.

A second aspect of the present invention can address the problem that the need to narrow the maximum passage area of the air-fuel ratio adjustment means arises as a negative suction pressure of the venturi mixer increases. It can also address the problem that the need to limit the variable range of the passage area arises because a variation in the biogas sucking flow rate caused by a change in the passage area increases along with an increase in the negative suction pressure.

When the mixed gas temperature is a low temperature, a combustible boundary of air-fuel ratios is narrowed, and therefore it is difficult to start the engine at a low temperature, but in a third aspect of the present invention, a combustible range of air-fuel ratios can be widened by heating a cooling water to warm up the engine, thus enabling the engine to be started at a low temperature.

In a fourth aspect of the present invention, preparations necessary for starting the biogas-fired engine can be made economically.

In fifth and sixth aspects of the present invention, for operating the engine, the biogas can be supplied to a combustion chamber of the engine at a flow rate necessary for causing predetermined combustion with a predetermined engine output by a differential pressure caused as a result of adjustment of the area of the venturi mixer, without any need to separately provide pressurization means.

### Brief Description of Drawings

[FIG. 1] A schematic diagram showing a configuration of an engine of a biogas-fired engine according to the present invention.
[FIG. 2] A schematic diagram showing an entire configuration of the biogas-fired engine according to the present invention.
[FIG. 3] A graph showing the relationship between an engine output and the air flow velocity of a venturi mixer in the biogas-fired engine according to the present invention.
[FIG. 4] Pie charts each showing a mixing ratio between a fuel gas and air in a case where the engine of the biogas-fired engine according to the present invention performs a stoichiometric operation with a predetermined output, of which: (a) shows a mixing ratio between a town gas and air; (b) shows a mixing ratio between a biogas and air in a case of the biogas having a calorific value of 1000 kcal/Nm³; and (c) shows a mixing ratio between a biogas and air in a case of the biogas having a calorific value of 1300 kcal/Nm³.
[FIG. 5] A graph showing the relationship between an excess air ratio and a flow rate of a mixed gas having passed through a venturi mixer when the venturi mixer according to the present invention is adopted as contrasted to when another venturi mixer is adopted in an engine of a biogas-fired engine.
[FIG. 6] A graph showing the relationship between the area of a passage in which air passes through in the venturi mixer of the biogas-fired engine according to the present invention and the effective opening area of an A/F valve located upstream of the venturi mixer.
[FIG. 7] Graphs showing the relationship of a mixed gas intake temperature with an excess air ratio and the relationship of an engine temperature with a starting rotation frequency in the biogas-fired engine according to the present invention.
[FIG. 8] A diagram for explanation of controls performed in the biogas-fired engine according to the present invention, which diagram contains graphs showing time-dependent changes in a gasifier operation control, an engine operation control, and a cooling-water heating control.

### Description of Embodiments

In the following, an embodiment of the present invention will be described with reference to the drawings.

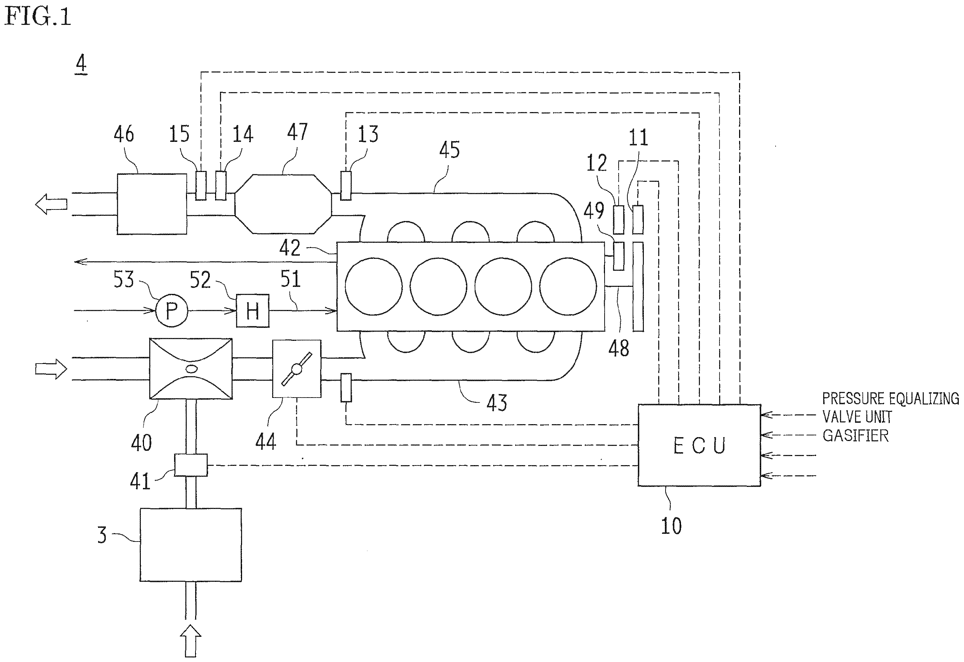

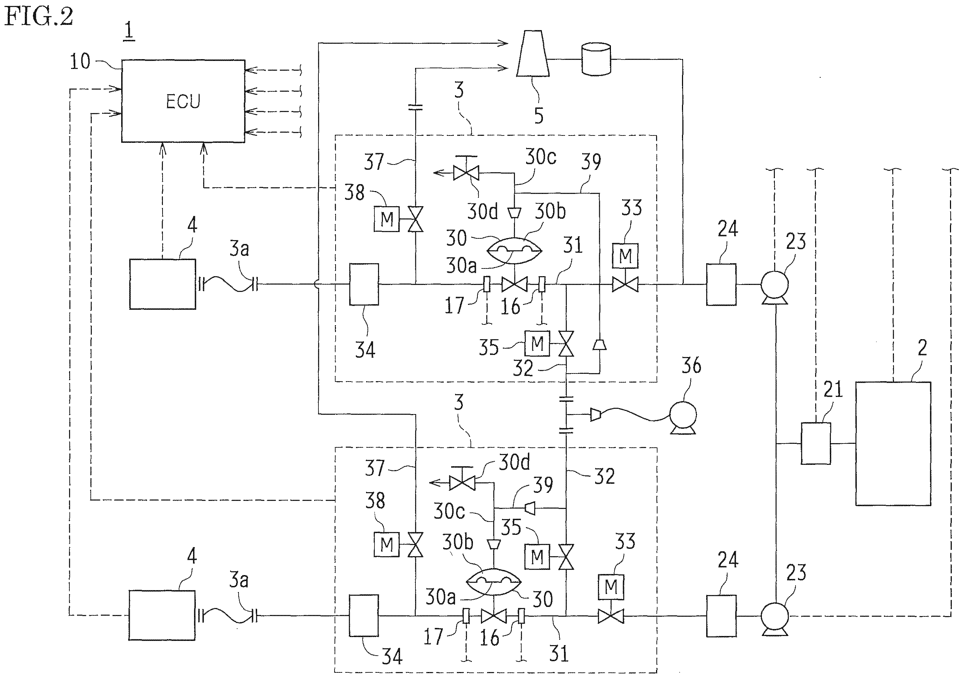

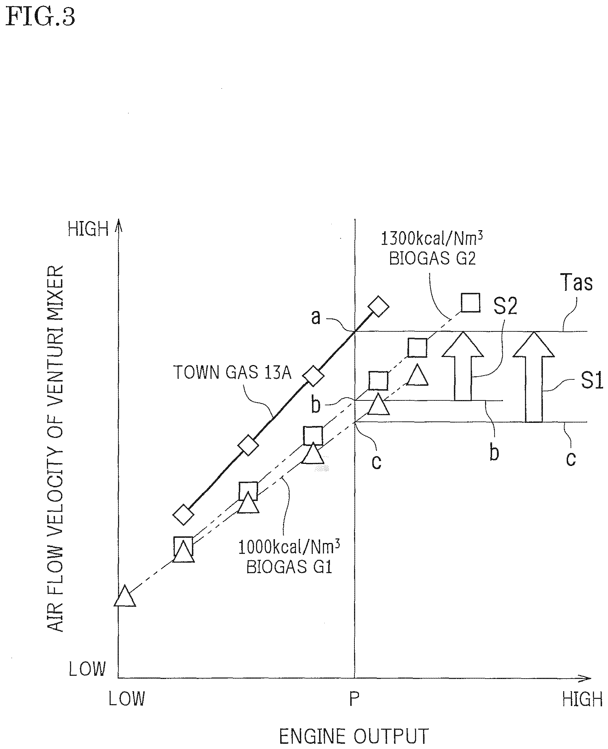

FIG. 1 shows a configuration of an engine 4 of a biogas-fired engine 1; FIG. 2 schematically shows an entire configuration of the biogas-fired engine 1; and FIG. 3 shows the relationship between an air flow velocity of a venturi mixer 40 and an output of the engine 4 in the biogas-fired engine 1.

The biogas-fired engine 1 according to the present invention is configured such that: a biogas produced in a gasifier 2 is supplied from a pressure equalizing valve unit 3 to the engine 4 via an A/F valve 41 and a venturi mixer 40; and the passage area of the venturi mixer 40 is adjusted so as to provide a target air flow velocity Tas at which a predetermined flow rate of biogas can be sucked by using a differential pressure between the pressure equalizing valve unit 3 and the venturi mixer 40.

The gasifier 2, which is formed of a furnace that thermally decomposes biomass raw materials such as wood chippings or rice hulls, is configured to produce, as a biogas, a pyrolysis gas as exemplified by a hydrocarbon gas obtained as a result of thermal decomposition under a low oxygen condition. The type of the gasifier 2 is not particularly limited, as long as it is able to produce a pyrolysis gas as a biogas by thermally decomposing biomass raw materials. Various types are adoptable including an updraft fixed bed type, a downdraft fixed bed type, a bubbling fluidized bed type, a circulating fluidized bed type, an entrained flow type, an internally fired rotary kiln, an externally fired rotary kiln, and the like. A calorific value of the biogas varies over time because of heterogeneity of the raw materials and a variation in heating in the gasifier 2. The embodiment of the present invention illustrates example cases of 1000 kcal/Nm³ and 1300 kcal/Nm³.

The biogas produced by the gasifier 2, which is obtained as a result of thermal decomposition, has a high temperature as it is. This is why a scrubber 21 configured to disperse water in a space is arranged downstream of the gasifier 2. As the biogas passes through the scrubber 21, the biogas is cooled.

The biogas having passed through the scrubber 21 is sent downstream by a blower 23, and sent to one portion or branched into a plurality of portions (two portions in this embodiment) in accordance with the number of connected engines 4, where the number of connected engines 4 differs depending on the amount of produced biogas. At this time, the biogas cooled by the scrubber 21 contains much moisture. Therefore, a drain pot 24 is arranged downstream of the blower 23. The drain pot 24 is configured to collect condensed water contained in the biogas. The biogas with the condensed water removed therefrom is supplied to the engine 4 via the pressure equalizing valve unit 3. The gasifier 2, the scrubber 21, the blower 23, and the like, are controlled by a control unit 10.

After passing through the drain pot 24, the biogas is supplied to the pressure equalizing valve unit 3.

The pressure equalizing valve unit 3 is configured to supply the biogas from the gasifier 2 to the engine 4 via the pressure equalizing valve 30 which is arranged in a gas supply path 31.

A gas shut-off valve 33 is arranged on the upstream end side of the gas supply path 31, so that a supply of the biogas to the gas supply path 31 can be shut off. A drain pot 34 is arranged on the downstream end side of the gas supply path 31, so that condensed water contained in the biogas to be supplied to the engine 4 can be collected again.

The pressure equalizing valve 30 is arranged in the gas supply path 31 at a location between the gas shut-off valve 33 and the drain pot 34. The pressure equalizing valve 30 has a pressure adjustment valve 30d provided in an atmospheric pressure release path 30c extending from an actuator 30b on a diaphragm 30a. The pressure equalizing valve 30 opens the pressure adjustment valve 30d to release the atmospheric pressure release path 30c to atmospheric pressure, thereby allowing the biogas supplied from a portion of the gas supply path 31 upstream of the pressure equalizing valve 30 to be supplied under atmospheric pressure to a portion of the gas supply path 31 downstream of the pressure equalizing valve 30 irrespective of a supply pressure in the upstream portion of the gas supply path 31. In the portion of the gas supply path 31 upstream of the pressure equalizing valve 30, a pressure sensor 16 is arranged for measuring a primary gas pressure of the biogas to be supplied to the pressure equalizing valve 30. In the portion of the gas supply path 31 downstream of the pressure equalizing valve 30, a pressure sensor 17 is arranged for measuring a secondary gas pressure of the biogas supplied from the pressure equalizing valve 30. Information given from these pressure sensors 16, 17 is sent to the control unit 10.

An air supply path 32 is connected to the gas supply path 31 at a location between the gas shut-off valve 33 and the pressure equalizing valve 30. Communication between the air supply path 32 and the gas supply path 31 is normally shut off by an air purge valve 35 which is arranged on the air supply path 32 side. Upon requirement of air purge, the air purge valve 35 is opened so that the pressure equalizing valve 30 is purged with air from the air supply path 32 via the gas supply path 31. This is why an air purge blower 36 is arranged on the upstream end side of the air supply path 32.

A discharge path 37 for discharging a surplus biogas to a flare stack 5 is arranged in the gas supply path 31 at a location between the pressure equalizing valve 30 and the drain pot 34. The surplus biogas is subjected to a combustion process in the flare stack 5. An air purge release valve 38 is arranged in the discharge path 37. The air purge release valve 38 is opened when the pressure equalizing valve 30 is purged with air, and thereby allows air after the air purge to escape from the gas supply path 31 through the discharge path 37.

An exit 3a which corresponds to a downstream end portion of the gas supply path 31 of the pressure equalizing valve unit 3 is connected to the A/F valve 41 of the engine 4. Thus, the biogas having passed through the drain pot 34 of the pressure equalizing valve unit 3 can be supplied to the A/F valve 41 of the engine 4. The pressure equalizing valve unit 3 is controlled by the control unit 10.

In the engine 4, the venturi mixer 40 configured to mix air with the biogas supplied from the A/F valve 41 is provided in an intake path 43 which is connected to a cylinder head 42. A throttle valve 44 is arranged between the venturi mixer 40 and the cylinder head 42. A silencer 46 is arranged in an exhaust path 45 which is connected to the cylinder head 42, and a three-way catalyst 47 is arranged between the silencer 46 and the cylinder head 42.

The engine 4 is provided with a pick-up sensor 11 for detecting a rotation angle of a crankshaft 48 and a pick-up sensor 12 for detecting a rotation angle of a cam shaft 49. A pre oxygen sensor 13 and a different post oxygen sensor 14 are arranged on the sides of the three-way catalyst 47 where an exhaust gas enters and exits, respectively. In addition, an entire region sensor 15 is arranged on the side of the three-way catalyst 47 where the exhaust gas exits.

At a time of starting the biogas-fired engine 1, the control unit 10 renders a cell (not shown) conducting, thereby enabling the pick-up sensor 11 for detecting a rotation angle of the crankshaft 48 to detect whether or not the engine 4 is started. In addition, the control unit 10 senses the compression top dead center based on a combination of signals of the pick-up sensor 11 and the pick-up sensor 12, and performs an ignition control with ignition means.

The control unit 10 also controls the amount of biogas to be produced by the gasifier 2, and has a control map such that the control unit 10 performs a perturbation control on the stoichiometric operation of the engine 4 in accordance with information of the control map, the control map including the relationship of the degree of opening of the A/F valve 41 with detection results given from the pre oxygen sensor 13, the post oxygen sensor 14, and the entire region sensor 15 in a case of performing the perturbation control on the engine 4 in the stoichiometric operation by using the biogas.

The used venturi mixer 40 is the one in which the passage area is set so as to provide a target air flow velocity Tas at which the biogas and air can be mixed at a mixing ratio necessary for causing stoichiometric combustion in the engine 4 with a predetermined output P. For example, FIG. 3 shows the relationship between the output of the engine 4 and the air flow velocity of the venturi mixer 40 necessary for achieving a mixing ratio between the fuel gas and air for operating the engine 4 with stoichiometric combustion in the biogas-fired engine 1 according to the present invention. To obtain the predetermined output P of the engine 4 of the biogas-fired engine 1, the venturi mixer 40 needs to have an air flow velocity of a if a town gas 13A is used; the same venturi mixer 40 needs to have an air flow velocity of b if a biogas G2 obtained when its combustible component has a calorific value of 1300 kcal/Nm³ is supplied while being pushed into the same venturi mixer 40 from the pressure equalizing valve unit 3 side toward the venturi mixer 40 side via the A/F valve 41; and the same venturi mixer 40 needs to have an air flow velocity of c if a biogas G1 obtained when its combustible component has a calorific value of 1000 kcal/Nm³ is supplied while being pushed into the same venturi mixer 40 from the pressure equalizing valve unit 3 side toward the venturi mixer 40 side via the A/F valve 41. For convenience of illustration, the biogases G1 and G2 are distinguished by their calorific values, but both of them are a biogas produced by the gasifier 2 with its calorific value varying over time.

Here, to obtain the predetermined output P of the engine 4 only with a negative suction pressure of the venturi mixer 40 without push-in of the biogas G1 in a case of using the biogas G1 which is obtained when its combustible component has a calorific value of 1000 kcal/Nm³, the venturi mixer 40 needs to have a negative suction pressure for sucking a greater amount of biogas G1, and therefore the venturi mixer 40 is changed to the one in which the passage area is set smaller so as to provide the target air flow velocity Tas that is higher than the air flow velocity c necessary in a case of pushing the biogas G1 in.

In FIG. 3, the target air flow velocity Tas necessary for obtaining the predetermined output P of the engine 4 only with a negative suction pressure of the venturi mixer 40 without push-in of the biogas G1 in a case of using the biogas G1 which is obtained when its combustible component has a calorific value of 1000 kcal/Nm³ is coincident with the air flow velocity a which is necessary if the town gas 13A is used, and an increment of the air flow velocity is S1.

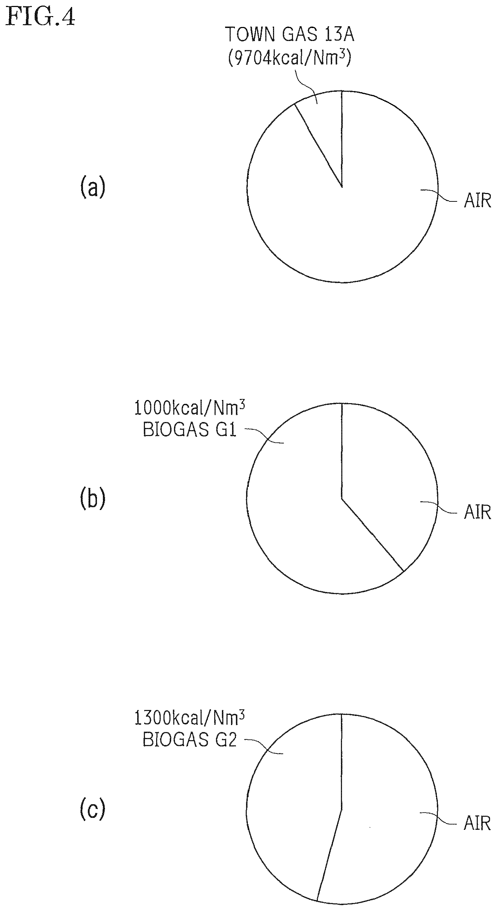

That is, as shown in FIG. 4(a), a calorific value of the combustible component contained in the mixed gas necessary for operating the engine 4 in stoichiometric combustion with the predetermined output P is determined by the mixing ratio between the town gas 13A and air in case of operating the engine 4 in stoichiometric combustion and a calorific value of the combustible component contained in the town gas 13A which is already obvious. Thus, if a sampling of the biogas G1 is taken from the gasifier 2 and a calorific value of the combustible component is found, a mixing ratio between the biogas G1 and air necessary for operating the engine 4 in stoichiometric combustion with the predetermined output P can be identified based on a contrast between the found calorific value and the calorific value of the town gas 13A, as shown in FIG. 4(b). To obtain a negative suction pressure that achieves such a mixing ratio between the biogas G1 and air, the venturi mixer 40 is used in which the passage area is set such that the air flow velocity increases by the increment S1 in order to provide the negative suction pressure, and thereby the engine 4 can be operated in stoichiometric combustion with the predetermined output P by using the biogas G1.

In a case of using the biogas G2 which is obtained when its combustible component has a calorific value of 1300 kcal/Nm³ as well, a mixing ratio between the biogas G2 and air necessary for operating the engine 4 in stoichiometric combustion with the predetermined output P can be identified from the calorific value, as shown in FIG. 4(c). To obtain a negative suction pressure that achieves such a mixing ratio between the biogas G2 and air, the venturi mixer 40 is used in which the passage area is set such that the air flow velocity increases by an increment S2 to obtain the target air flow velocity Tas which is also coincident with the air flow velocity a necessary when the town gas 13A is used in order to provide the negative suction pressure, and thereby the engine 4 can be operated in stoichiometric combustion with the predetermined output P by using the biogas G2.

As shown in FIG. 4(b) and FIG. 4(c), as for the biogas G1 to G2 obtained when the combustible component has a calorific value of 1000 kcal/Nm³ to 1300 kcal/Nm³, the venturi mixer 40 in which the passage area is set so as to increase the air flow velocity by the increment S1 to S2 that enables achievement of a biogas/air mixing ratio of 1/1 and more specifically 54/46 to 40/60 in accordance with the calorific value of the combustible component of the biogas relative to the mixing ratio of 1:17 between the town gas 13A and air is selectively used, so that the engine 4 can be operated in stoichiometric combustion with the predetermined output P, though not necessarily because the calorific value of the biogas varies over time at this time.

The biogas-fired engine 1 having the above-described configuration, which adopts the venturi mixer 40 whose passage area is set so as to increase the air flow velocity by the increment S1 to S2, enables an amount of biogas necessary for stoichiometric combustion to be supplied to the engine 4 without the need to push a biogas into the venturi mixer 40 from the pressure equalizing valve unit 3 side even when a combustible component in the obtained biogas has a low calorific value. This eliminates the risk that a malfunction of the A/F valve 41, the venturi mixer 40, or the throttle valve 44 might be caused by condensed water generated by push-in of the biogas, and it is possible to operate the engine 4 of the biogas-fired engine 1 with the predetermined output P.

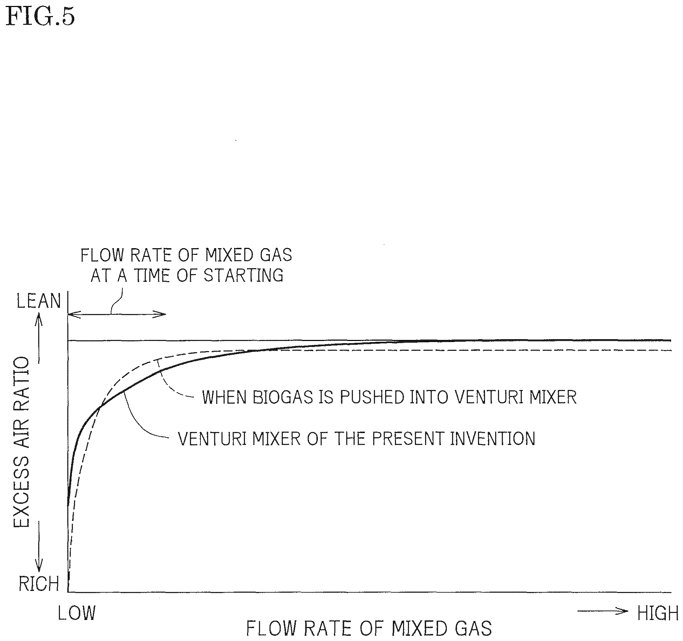

In a venturi mixer 40 configured such that a biogas is pushed into the venturi mixer 40 from the pressure equalizing valve unit 3 side, as shown in FIG. 5, a rapid shift to the lean state occurs at a time of starting the engine 4, which makes a start of the engine 4 difficult. Adoption of the venturi mixer 40 in which the passage area is set so as to increase the air flow velocity by the increment S1 to S2 as in the biogas-fired engine 1 of the present invention enables a sufficient amount of biogas to be supplied even at a time of starting the engine 4. Thus, a start of the engine 4 may not be made difficult.

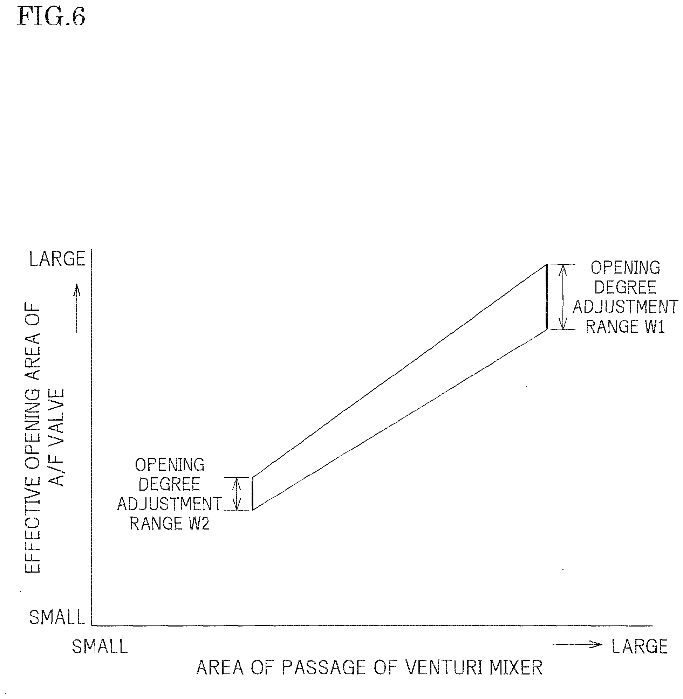

Since the A/F valve 41 is arranged between the pressure equalizing valve unit 3 and the venturi mixer 40, the amount of biogas supplied from the venturi mixer 40 to the engine 4 is influenced by the degree of opening of the A/F valve 41. In addition, as described above, the venturi mixer 40 is used in which the passage area is set smaller so as to increase the air flow velocity by the increment S1 (or S2) to provide an air flow velocity higher the air flow velocity c (or b) required in a case of pushing the biogas in, thereby enabling a large amount of biogas to be supplied to the engine 4. Therefore, a slight change in the degree of opening of the A/F valve 41 leads to a large change in the amount of biogas supply. Thus, as shown in FIG. 6, in accordance with the passage area of the venturi mixer 40 being set smaller, an opening degree adjustment range of the A/F valve 41 is changed to an opening degree adjustment range W2 corresponding to the air flow velocity increment S1 (or S2) which is lower than an opening degree adjustment range W1 of the venturi mixer 40 used in a case of the air flow velocity c (or b), and an adjustment width of the opening degree adjustment range W2 is also reduced.

As a result, even when the negative suction pressure in the venturi mixer 40 increases by an increment corresponding to the air flow velocity increment S1 (or S2), the A/F valve 41 is able to adjust the amount of biogas supply accordingly.

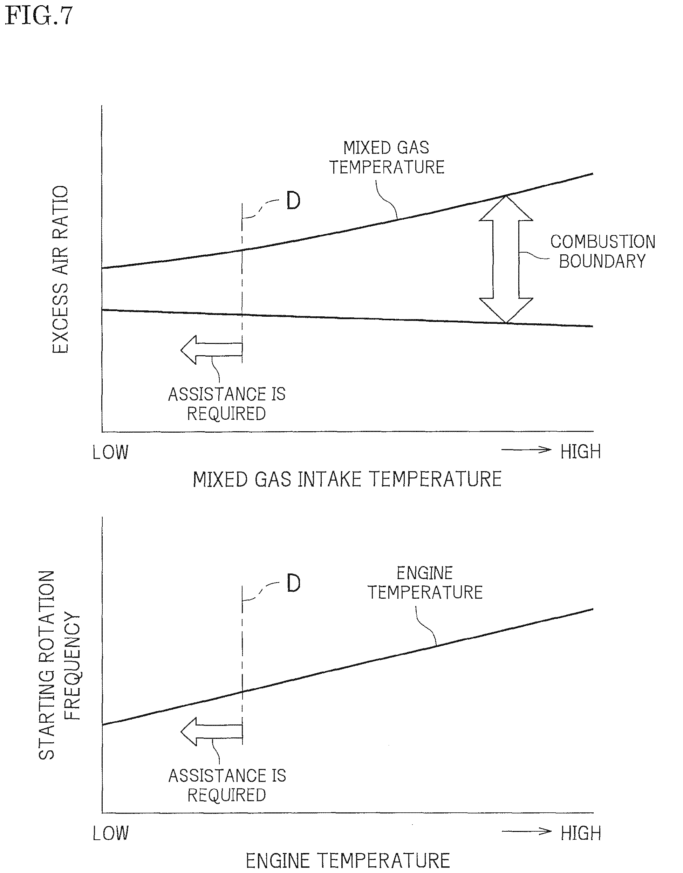

As shown in FIG. 7, unless the engine 4 has a temperature equal to or higher than a predetermined temperature D, a combustion boundary has a narrow width and the starting rotation frequency is low, which makes a start difficult. In this respect, the biogas-fired engine 1 of the present invention includes a heater 52 provided in a cooling water circuit 51 of the engine 4, so that cooling water heated by the heater 52 is circulated by a cooling water pump 53. The heater 52 and the cooling water pump 53 are controlled by the control unit 10. At this time, upon receiving an instruction to start the biogas-fired engine 1, the control unit 10 drives the cooling water pump 53 and senses the cooling water temperature, and if it is lower than the predetermined temperature D, continues the heating by the heater 52 and stands by for driving the cell of the engine 4. This configuration, in which the engine 4 is started after heated to a temperature equal to or higher than the predetermined temperature D, provides a wider combustible range of air-fuel ratios, and enables the engine 4 to start at a low temperature.

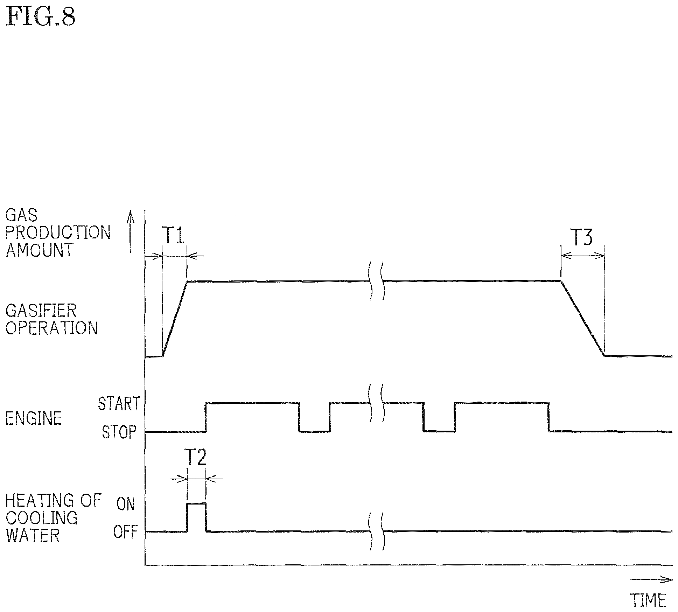

To start the biogas-fired engine 1 having the above-described configuration, as shown in FIG. 8, the control unit 10 firstly starts to operate the gasifier 2, and in conjunction therewith, starts the engine 4. Here, the start is difficult even though the operation of the gasifier 2 is started, if a biogas sufficient for operating the engine 4 is not immediately produced or if the engine 4 is not heated to a temperature equal to or higher than the predetermined temperature D. The control unit 10, therefore, is configured to wait for elapse of a time T1 and a time T2, the time T1 being a time required for the amount of produced biogas to reach a suppliable amount, the time T2 being a time required for the engine 4 to be heated to a temperature equal to or higher than the predetermined temperature D. That is, the control unit 10 is configured to drive the cooling water pump 53 and sense the cooling water temperature, and if it is lower than the predetermined temperature D, continue the heating by the heater 52 until reaching a temperature equal to or higher than the predetermined temperature D. Only after the engine 4 is heated to a temperature equal to or higher than the predetermined temperature D, the engine 4 is started by the cell of the engine 4.

As thus far described, the control unit 10 is configured to wait for elapse of the time T1 which is required for reaching a calorific value that makes the biogas suppliable, and also wait for elapse of the time T2 which is required for the engine 4 to be heated to a temperature equal to or higher than the predetermined temperature D, before starting the engine 4. This can ensure that the engine 4 be started even at a low temperature because preparations necessary for starting the biogas-fired engine 1 are completed over time.

Then, the control unit 10 continues the operation of the gasifier 2 unless the biogas-fired engine 1 is stopped, because once the gasifier 2 is stopped, a time is required for the amount of produced biogas to reach a suppliable amount. The engine 4, on the other hand, is stopped or started in accordance with conditions that are set in the control unit 10, and thus repeats a start and a stop many times a day.

After stopping the biogas-fired engine 1, the control unit 10 stops both the gasifier 2 and the engine 4 in its stop program. At this time, the engine 4 is stopped immediately, whereas the gasifier 2 takes a time T3 for gradual settlement of biogas production after the stop. A surplus biogas produced after the engine 4 is stopped is subjected to a combustion process in the flare stack 5.

In the biogas-fired engine described above 1, the control unit 10 is configured to, after starting operation, wait for elapse of the time T1 until the amount of produced biogas reaches a suppliable amount, but instead it may be configured to wait for reaching a predetermined pressure. In such a configuration, a suppliable amount of produced biogas can be detected by waiting for the primary gas pressure sensed by the pressure sensor 16 upstream of the pressure equalizing valve 30 to become equal to or higher than a predetermined value.

The control unit 10 is configured to start the engine 4 after waiting for elapse of the time T1 required for reaching a calorific value that makes the biogas suppliable and elapse of the time T2 required for the engine 4 to be heated to a temperature equal to or higher than the predetermined temperature D, but a configuration is also acceptable in which the control unit 10 starts to heat the engine 4 up to a temperature equal to or higher than the predetermined temperature D simultaneously with starting the operation of the gasifier 2. In this configuration, the start of the engine 4 can be started after elapse of the time T1 or the time T2, whichever is longer.

It should be noted that the present invention may be embodied in many different forms without departing from the spirit or essential characteristics thereof. The above-described embodiments are therefore to be considered in all respects only as illustrative and not restrictive. The scope of the present invention is defined by the claims, and never bound by the description. All modifications and changes which come within the scope of the claims are to be embraced by the present invention.

### Reference Signs List

- 1: biogas-fired engine
- 10: control unit
- 2: gasifier
- 30: pressure equalizing valve (fuel pressure adjustment means)
- 31: gas supply path (fuel path)
- 4: engine
- 40: venturi mixer
- 41: A/F valve (air-fuel ratio adjustment means)
- 43: intake path
- 51: cooling water circuit
- 52: heater (heating means)
- 53: cooling water pump
- D: predetermined temperature
- G1: biogas
- G2: biogas
- S1: air flow velocity increment
- S2: air flow velocity increment
- Tas: target air flow velocity (air flow velocity)
- T1: time (first predetermined time)
- T2: time (second predetermined time)
- P: output

## Claims

1. A biogas-fired engine fueled solely by a biogas derived from organic waste, the biogas-fired engine comprising:
fuel pressure adjustment means arranged in a fuel path;
air-fuel ratio adjustment means arranged in the fuel path at a location downstream of the fuel pressure adjustment means; and
a venturi mixer arranged at a location where the fuel path joins an intake path, wherein
the fuel pressure adjustment means adjusts a pressure to approximately atmospheric pressure, and an area of the venturi mixer is adjusted so as to provide an air flow velocity that allows the biogas to be sucked at a flow rate necessary for causing predetermined combustion with a predetermined engine output by a differential pressure between a pressure of the venturi mixer and a pressure adjusted by the fuel pressure adjustment means.

2. The biogas-fired engine according to claim 1, wherein
a maximum passage area of the air-fuel ratio adjustment means and a variable range of the passage area are adjusted in accordance with the adjustment of the area of the venturi mixer.

3. The biogas-fired engine according to claim 1, further comprising
heating means provided in an engine cooling water circuit, and
control means for, upon receiving a start command, driving a cooling water pump and sensing a cooling water temperature, and if the temperature is lower than a predetermined temperature, driving the heating means until the temperature reaches the predetermined temperature or higher while standing by for driving engine forced-drive means.

4. The biogas-fired engine according to claim 1, further comprising:
a gasifier for combusting organic waste to produce a biogas, the gasifier being provided in the fuel path at a location upstream of the fuel pressure adjustment means,
heating means provided in an engine cooling water circuit, and
control means for starting combustion in the gasifier a first predetermined time before an engine start time, sensing a cooling water temperature, and if the temperature is lower than a predetermined temperature, driving a cooling water pump a second predetermined time before, the second predetermined time being shorter than the first predetermined time, while driving the heating means until the temperature reaches the predetermined temperature or higher.

5. The biogas-fired engine according to claim 1, wherein
the area of the venturi mixer where air passes through is adjusted such that an air flow velocity is obtained, the air flow velocity enabling the biogas and air to be mixed in such a manner as to provide a calorific value that is comparable to a calorific value of a mixed gas obtained in a case where stoichiometric combustion of the engine is performed with a predetermined output by using a town gas.

6. The biogas-fired engine according to claim 5, wherein
the adjustment is made so as to obtain an air flow velocity that enables the biogas and air to be mixed at a biogas/air ratio of 54/46 to 40/60.
